# EUROPÄISCHE PATENTSCHRIFT

(11) **EP 0 584 480 B1**
(45) Veröffentlichungstag und Bekanntmachung des Hinweises auf die Patenterteilung: **22.01.1997**
(21) Anmeldenummer: 93109917.0
(22) Anmeldetag: 22.06.1993
(51) Int. Cl.: F16J 15/32

(54) **Dichtungsvorrichtung für Mehrwegeventile**
Sealing arrangement for multi-way valves
Dispositif d'étanchéité pour soupapes à voies multiples

(30) Priorität: 26.08.1992 DE 4228439
(43) Veröffentlichungstag der Anmeldung: 02.03.1994
(73) Patentinhaber: Festo KG, D-73734 Esslingen (DE)
(72) Erfinder: Stoll, Kurt, Dipl.-Ing., D-7300 Esslingen (DE)
(74) Vertreter: Abel, Martin, Dipl.-Ing.

(56) Entgegenhaltungen:
- EP-A- 0 414 298
- FR-A- 2 234 811
- US-A- 3 603 602
- US-A- 3 865 386
- US-A- 3 968 971
- US-A- 4 428 588

## Beschreibung

Die Erfindung betrifft eine Dichtungsvorrichtung zur Abdichtung zwischen dem Ventilgehäuse und dem axial bewegbaren Ventilschieber eines Mehrwegeventils, umfassend eine am Ventilgehäuse angeordnete radiale Haltevertiefung und einen in der Haltevertiefung aufgenommenen Dichtungsring, wobei die Haltevertiefung zwei in axialer Richtung beabstandete und den Dichtungsring aufnehmende Vertiefungsflanken aufweist, wobei ferner der Dichtungsring mit einem ringförmigen Dichtkörper aus Material mit gummielastischen Eigenschaften versehen ist, und wobei der Dichtungsring folgende Teile aufweist:
- eine an seinem radial aussen liegenden Bereich vorgesehene, zur Verankerung in einer ventilgehäusefesten Haltevertiefung dienende ringförmige Haltepartie,
- eine radial innen angeordnete, den Ventilschieber umschließende ringförmige Dichtpartie, deren innerhalb der Haltevertiefung liegender Abschnitt eine geringere Breite als der axiale Abstand zwischen den Vertiefungsflanken der Haltevertiefung aufweist,
- einen zwischen der Haltepartie und der Dichtpartie angeordneten, konzentrisch umlaufenden Stegabschnitt, der eine reduzierte Dichtkörperdicke aufweist und einen Schwenkbereich bildet, der der Dichtpartie relativ zu der Haltepartie eine axial gerichtete Seitwärtsbewegung ermöglicht,
- und einen radial ausserhalb des Schwenkbereiches unter koaxialer Anordnung an dem Dichtkörper festgelegten Versteifungsring aus gegenüber dem Dichtkörpermaterial härterem Material.

Mehrwegeventile verfügen im allgemeinen über ein Ventilgehäuse mit einem Aufnahmeraum für einen Ventilschieber, der kolbenartig mit runder Außenkontor ausgebildet ist. Zur Abdichtung zwischen dem Ventilgehäuse und dem Ventilschieber kommen Dichtungsringe zum Einsatz, die den Ventilkolben konzentrisch umschließen und in Haltevertiefungen des Ventilgehäuses festgelegt sind.

Aus der US-A-3 968 971 gehen Dichtungsringe der eingangs genannten Art hervor. Diese verfügen über einen Dichtkörper, an dessen äusseren Bereich eine Haltepartie zur Befestigung in einer Haltevertiefung vorgesehen ist, und dessen radial innen liegender Bereich eine mit dem Ventilschieber zusammenwirkende Dichtpartie bildet. Da es erstrebenswert ist, das Dichtkörpermaterial möglichst weichelastisch auszubilden, um den Dichteffekt optimal zu gestalten, andererseits jedoch das Problem besteht, daß die Dichtpartie in einem solchen Falle leicht am Ventilschieber anhaften könnte, ist im Anschluß an die Dichtpartie ein Stegabschnitt vorgesehen, der einen Schwenkbereich bildet, welcher der Dichtpartie eine seitliche Verschwenkmöglichkeit eröffnet. Die Dichtpartie wird daher bei der Anfahrbewegung des Ventilschiebers seitlich ausgelenkt, wobei sie auf der Oberfläche des Ventilschiebers sanft abläuft, so daß eine schonende Trennung einer eventuell vorhandenen Haftverbindung unterstützt wird.

Die Schwenkwinkel der im Betrieb von der Dichtpartie des bekannten Dichtungsringes ausgeführten Schwenkbewegung sind allerdings relativ groß, so daß der Stegabschnitt größeren Beanspruchungen ausgesetzt ist, die Beschädigungen zur Folge haben können. Desweiteren könnte die Beanspruchung der Dichtpartie dazu führen, daß der betreffende Abschnitt des Dichtkörpers von einem Versteifungsring abgelöst wird, der im Bereich der Haltepartie angeordnet ist.

Es ist daher die Aufgabe der vorliegenden Erfindung, einen Dichtungsring der eingangs genannten Art zu schaffen, der bei robotergerechtem Aufbau eine sehr gute Dichtwirkung vermittelt, und bei dem die Gefahr eines durch Anhaftung bedingten Zerstörens der Dichtpartie auch nach längerer Stillstandszeit eines damit ausgestatteten Mehrwegeventils vermieden ist.

Diese Aufgabe wird dadurch gelößt, daß der Versteifungsring im Bereich der Haltepartie in das Material des einstückig ausgebildeten Dichtkörpers eingebettet und von dem ihm umgebenden Dichtkörpermaterial an Ort und Stelle gehalten wird, und daß der Dichtkörper im Bereich der axial gerichteten Flanken des Stegabschnittes derart konkav konturierte Einschnürungen aufweist und die Vertiefungsflanken den Dichtungsring im Bereich seiner Dichtpartie derart flankieren, daß die Dichtpartie bei der ihr ermöglichten Seitwärtsbewegung auf die Vertiefungsflanke der Haltevertiefung aufläuft.

Bei einem derartigen Dichtungsring kann als Dichtkörpermaterial extrem weichelastisches Dichtmaterial verwendet werden, ohne Einbußen hinsichtlich der Gestalttreue des Dichtungsringes hinnehmen zu müssen. Der eingebettete Versteifungsring gewährleistet jederzeit eine handlingsgerechte Ringgestalt und sorgt außerdem dafür, daß der Dichtungsring sicher in der Haltevertiefung verankert bleibt, selbst wenn in Folge einer durch Anhaften am Ventilkolben verursachten Zugbeanspruchung hohe Zugkräfte wirken. Die Verschwenkbarkeit der Dichtpartie gibt dem Ventilschieber die Möglichkeit, sich trotz anhaftender Dichtpartie zu bewegen, so daß er bereits erheblichen Schwung hat, wenn die Schwenkbewegung der Dichtpartie dadurch unterbunden wird, daß die Dichtpartie auf die zugeordnete Vertiefungsflanke aufläuft. Mit dem bereits vorliegenden Schwung kann sich der Ventilschieber ohne Beschädigungsgefahr problemlos von dem Haftgriff des Dichtkörpers befreien.

Der erfindungsgemäße Dichtungsring läßt sich in Folge der Aussteifung vor allem im Zusammenhang mit solchen Ventilen verwenden, deren Ventilgehäuse im Bereich der Haltevertiefung quer geteilt sind oder bei denen sich die Haltvertiefungen zwischen axial aufeinanderfolgenden Ring- oder Hülsenkörpern befinden. Besonders vorteilhaft wird jedoch die Verwendung im Zusammenhang mit einem Mehrwegeventil angesehen, das ein längsgeteiltes Ventilgehäuse besitzt, so daß bei voneinander entfernten Gehäuseteilen jeder dieser Gehäuseteile einen Umfangsabschnitt einer jeweiligen Haltevertiefung trägt. Hier wird also eine jeweilige Haltevertiefung beim öffnen des Ventilgehäuses über einen Abschnitt ihres Umfanges, insbesondere einen hälftigen Abschnitt, geöffnet, so daß der Dichtungsring problemlos eingelegt werden kann.

Zwar zeigt die US-A-3 603 602 bereits einen Dichtungsring mit einem in einen einstückigen Dichtungskörper eingebetteten umlaufenden Ringkörper. Der Ringkörper dient zur axialen Abstützung des Dichtungsringes, der im übrigen fest eingespannt ist, so daß Schwenkbewegungen der Dichtpartie nicht auftreten.

Bei dem in der FR-A-2 234 811 abgebildeten Dichtungsring ist der Dichtpartie, wie schon im Falle der eingangs genannten US-A-3 968 971, kein die Schwenkbewegung begrenzendes Bauteil zugeordnet.

Vorteilhafte Weiterbildungen der Erfindung sind in den Unteransprüchen aufgeführt.

Der Versteifungsring kann vom Dichtkörpermaterial ringsum vollständig umschlossen sein. Zweckmäßigerweise erreicht man dies dadurch, daß man den Versteifungsring im Rahmen eines Spritzgießverfahrens mit dem Dichtkörpermaterial umspritzt.

Bei einer Variante ist vorgesehen, den Dichtkörper mit einer entlang ihres Umfanges offenen Aufnahmevertiefung zu versehen, in der der Versteifungsring insbesondere vollständig einsitzt. Hierbei kann der Versteifungsring als mechanisch in der ringförmigen Vertiefung fixiertes Einlegeteil ausgebildet sein. Die mechanische Fixierung kann allein durch die Elastizität des umgebenden Dichtkörpermaterials erfolgen oder beispielsweise durch Anformung besonderer Mittel an den Dichtkörper, die ein Einschnappen des Versteifungsringes ermöglichen.

Nachfolgend wird die Erfindung anhand der beiliegenden Zeichnungen näher erläutert. In dieser zeigen:
- Figur 1: eine erste Bauform des erfindungsgemäßen Dichtungsringes, der in der zugehörigen Halterungsvertiefung eines Mehrwegeventils festgelegt ist, wobei letzteres lediglich ausschnittsweise im Längsschnitt schematisch dargestellt ist, und
- Figur 2: eine weitere Bauform des Dichtungsringes in einer der Figur 1 entsprechenden Darstellungsweise, wobei der Einfachheit halber nur die auf einer Seite der Mittellinie liegenden Bestandteile gezeigt sind.

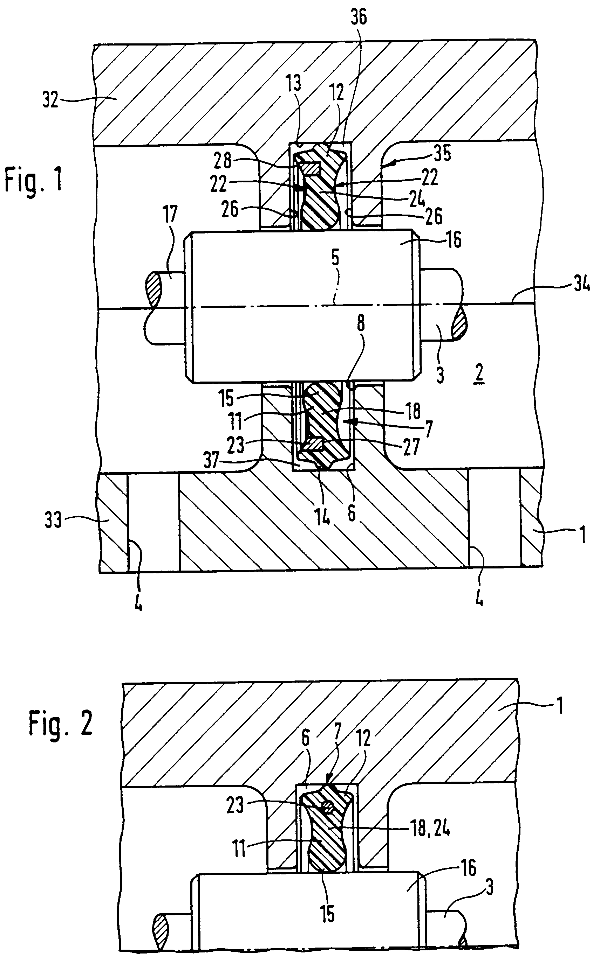

In Figur 1 ist im Längsschnitt ein Längenabschnitt eines Ventilgehäuses 1 eines Mehrwegeventils gezeigt, das zur Steuerung eines Druckmittels insbesondere pneumatischer Art vorgesehen ist. Im Innern des Ventilgehäuses 1 befindet sich ein Aufnahmeraum 2, in dem ein axial beweglicher Ventilschieber 3 unter koaxialer Ausrichtung angeordnet ist. Bei dem Ventilschieber 3 handelt es sich um einen sogenannten Kolbenschieber mit kreisförmiger Außenkontur, Ventilschieber dieser Art sind allseits bekannt. Die Betätigung des Ventilschiebers 3 erfolgt auf beliebige Art, beispielsweise unmittelbar pneumatisch oder unter Vorschaltung eines elektrisch betätigbaren Magnetventils als Vorsteuerventil.

In den Aufnahmeraum 2 münden umfangsseitig entlang der Gehäuselänge verteilt angeordnete Ventilkanäle 4, an die in bekannter Weise eine Druckmittelquelle und/oder eine Druckmittelsenke und/oder Verbraucher anschließbar sind. Durch die Stellung des Ventilschiebers 3 wird die Zuordnung der Ventilkanäle 4 zueinander festgelegt.

Das Ventilgehäuse 1 besitzt eine Mehrzahl von in Richtung der Längsachse 5 des Aufnahmeraumes 2 aufeinanderfolgend angeordneten Haltevertiefungen 6 für Dichtungsringe 7. In Figur 1 ist lediglich eine solche ringförmige Haltervertiefung 6 gezeigt, in der ein Dichtungsring 7 aufgenommen ist. Die Haltevertiefung 6 befindet sich am Umfang des Aufnahmeraumes 2, bezüglich dessen sie koaxial angeordnet ist, wobei sie radial innen, zum Aufnahmeraum 2 hin, eine umlaufende Öffnung 8 besitzt.

Der beispielsgemäße Dichtungsring 7 besitzt einen Dichtkörper 11 aus Material mit gummielastischen Eigenschaften. Bevorzugt besteht er aus relativ weichem, gut biegbarem Elastomermaterial. Sein radial außen liegender Umfangsabschnitt bildet eine ringförmige Haltepartie 12, die in dem in Figur 1 gezeigten montierten Zustand dem Vertiefungsgrund 13 der Haltevertiefung 6 zugewandt ist. Die Haltepartie 12 hat maßgeblichen Anteil daran, daß der Dichtungsring 7 unter allen Bedingungen sicher in der Haltevertiefung 6 verankert bleibt.

Die Haltepartie 12 hat überdies eine Dichtfunktion in Bezug zum Ventilgehäuse 1. Sie verhindert, daß Druckmittel zwischen dem Dichtungsring 7 und dem Ventilgehäuse 1 axial hindurchströmt. Zu diesem Zweck ist die Haltepartie 12 am radial außen liegenden Rand mit einem umlaufenden, insbesondere wulstartigen Dichtvorsprung 14 versehen, der an den Vertiefungsgrund 13 andrückbar ist.

Radial innen, im Bereich seines Innenumfanges, ist am Dichtkörper 11 eine Dichtpartie 15 ausgeformt. Sie kann wie abgebildet eine ballige Querschnittskontur besitzen. Zweckmäßig ist es, wenn ihre nach radial innen weisende Außenfläche im Querschnitt gemäß Figur 1 gesehen bauchig abgerundet ist. Die Dichtpartie 15 ist vorgesehen, um mit dem Ventilschieber 3 dichtend zusammenzuarbeiten, wenn dieser eine bestimmte, in Figur 1 gezeigte Stellung einnimmt. In besagter Stellung ist ein zylindrischer Steuerabschnitt 16 des Ventilschiebers 3 in den Dichtungsring 7 eingesteckt, so daß er von der Dichtpartie 15 eng umschlossen wird.

Wird der Ventilschieber 3 axial verschoben, so gelangt der Steuerabschnitt 16 aus dem vom Dichtungsring 7 umgrenzten Bereich heraus und es gelangt ein Ventilschieberabschnitt 17 geringeren Durchmessers in besagten Bereich, so daß zwischen dem Ventilschieber 3 und der Dichtpartie 15 ein Ringspalt vorliegt, der ein axiales Hindurchströmen von Druckmittel gestattet.

Allein schon aus geometrischen Gründen sorgt ein zwischen der Dichtpartie 15 und der Haltepartie 12 angeordneter Stegabschnitt 18 des Dichtkörpers 11 für sehr gute Elastizitätswerte in radialer Richtung. Die in Richtung der Längsachse 5, d.h. axial gemessene Dichtkörperdicke ist im Bereich des Stegabschnittes 18 geringer als im Bereich der Dichtpartie 15 und der Haltepartie 12. Auch der Stegabschnitt 18 hat ringförmige Erstreckung, er liegt konzentrisch zwischen der Haltepartie 12 und der Dichtpartie 15.

Im Querschnitt gemäß Figur 1 gesehen, also bei einem Schnitt durch den Dichtungsring 7 mit einer sich axial und radial erstreckenden Schnittebene, läßt sich der Stegabschnitt 18 auch dadurch charakterisieren, daß der Dichtkörper 11 an seinen beiden axial gerichteten Flanken mit einer insbesonder konkaven Einschnürung 22 versehen ist. Die eingeschnürten Flankenbereiche gehen zweckmäßigerweise fließend in die konvex gestaltete Oberfläche der Dichtpartie 15 über. Man erhält dadurch ein tropfenähnliches Profil.

Da der Werkstoff des Dichtkörpers 11 doch sehr nachgiebig ist, schmiegt sich die Dichtpartie 15 optimal an die Umfangsfläche des Steuerabschnittes 16 an. Bei einer axialen Verlagerung des Ventilschiebers 3 besteht somit die Tendenz, den Dichtungsring 7 als Ganzes über die Öffnung 8 aus der Haltevertiefung 6 herauszuziehen. Dem wird allerdings durch einen Versteifungsring 23 entgegengewirkt, der im Bereich der Haltepartie 12 in das Dichtkörpermaterial eingebettet ist. Er besteht aus gegenüber dem Dichtkörpermaterial härterem Material und ist insbesondere ein Ringkörper aus Hartkunststoff oder vorzugsweise Metall wie Stahl. Da er sich praktisch nicht oder nur sehr wenig radial stauchen läßt, sorgt er dafür, daß der Dichtkörper 11 und insbesondere dessen Haltepartie 12 stets die korrekte Position in der Haltevertiefung 6 beibehält. In dieser korrekten Position wird auch der Dichtvorsprung 14 radial an den Vertiefungsgrund 13 angedrückt. Verstärkt wird diese radiale Andrückkraft durch den eingeführten Steuerabschnitt 16, der auf den Dichtkörper 11 im Sinne eines radialen Aufweitens einwirkt.

Das verwendete Dichtkörpermaterial ist in aller Regel inkompressibel. Durch die ringförmigen umlaufenden Einschnürungen 22 ist in diesem Falle genügend Freiraum zur Aufnahme verformten Dichtkörpermaterials geschaffen.

Nach längerer Stillstandsdauer des Ventils wird es sich nicht vermeiden lassen, daß die Dichtpartie 15 sehr stark an dem Steuerabschnitt 16 anhaftet, zumal wenn sie aus stark anschmiegefähigem Dichtungsmaterial besteht. Daß dennoch beim nachfolgenden ersten axialen Verlagern des Ventilschiebers 3 keine Beschädigung an der Dichtpartie 15 auftritt, ist vor allem der Tatsache zu verdanken, daß der Stegabschnitt 18 einen Schwenkbereich 24 bildet, der der Dichtpartie eine axial gerichtete Seitwärtsbewegung zur einen oder anderen Seite ermöglicht. Gewährleistet wird diese gewisse axiale Verlagerbarkeit beispielsgemäß noch dadurch, daß die Breite der Haltevertiefung 6 zumindest im Bereich der aufgenommenen Dichtpartie 15 eine größere Breite besitzt als die Dichtpartie 15 selbst. Dadurch wird in gewissem Rahmen eine Pendelbewegung erlaubt.

Verlagert sich nun der Steuerabschnitt 16 in axialer Richtung, so nimmt er dank der Pendel- bzw. Schwenkmöglichkeit die anhaftende Dichtpartie 15 mit. Durch die dabei überlagerten Bewegungen rollt die Oberfläche der Dichtpartie 15 praktisch an der Oberfläche des Steuerabschnittes 16 ab, womit die starke Haftverbindung schadlos abgelöst wird. Zugleich ist dem Ventilschieber 3 die Möglichkeit gegeben, sich trotz anhaftender Dichtpartie 15 zu bewegen, so daß er bereits erheblichen Schwung hat, wenn die Schwenkbewegung der Dichtpartie 15 dadurch unterbunden wird, daß die Dichtpartie 15 auf die zugeordnete Vertiefungsflanke 26 aufläuft. Mit dem bereits vorliegenden Schwung kann sich der Ventilschieber 3 problemlos von dem Haftgriff des Dichtkörpers 11 befreien, was bei seitlich starr eingespanntem Dichtkörper kaum möglich wäre. Hier wäre es unter Umständen sehr schwierig, das Ventil überhaupt in Gang zu bringen.

Zweckmäßigerweise ist der Dichtungsring 7 auch im Bereich der Haltepartie 12 weniger breit als die Innenbreite der Haltevertiefung 6. Das vorhandene Axialspiel zwischen der Haltepartie 12 und den Vertiefungsflanken 26 ist allerdings vorzugsweise geringer als das zwischen der Dichtpartie 15 und den Vertiefungsflanken 26 vorherrschende.

Beim Ausführungsbeispiel gemäß Figur 1 sitzt der Versteifungsring 23 in einer ringförmigen Aufnahmevertiefung 27 der Haltepartie 12 ein. Diese Aufnahmevertiefung 27 befindet sich beispielsgemäß an einer der beiden Axialseiten des Dichtungsringes 7, wobei ihre ringartig umlaufende Öffnung 28 der zugeordneten Vertiefungsflanke 26 zugewandt ist. Die Gestaltung der Aufnahmevertiefung 27 ist beispielsgemäß in einer Weise auf diejenige des Versteifungsringes 23 abgestimmt, daß letzterer bündig mit der sich an die Aufnahmevertiefung 27 anschließenden Außenoberfläche des Dichtkörpers 11 verläuft. Es ist von Vorteil, wenn der Versteifungsring 23 nicht über die Außenoberfläche des Dichtkörpers 11 vorsteht.

Bei dem Versteifungsring 23 gemäß Figur 1 handelt es sich um ein Einlegeteil, das mechanisch in der nutähnlichen Aufnahmevertiefung 27 fixiert ist. Dies geschieht beispielsgemäß allein durch eine geeignete Abstimmung der radial gemessenen Breitenverhältnisse, wobei der Versteifungsring 23 allein durch die elastische Vorspannung des ihn umgebenden Dichtkörpermaterials an Ort und Stelle gehalten wird. Der Versteifungsring 23 kann eingepreßt sein, er kann aber auch eingeklebt oder durch Einschnappen oder auf sonstige Weise fixiert sein.

Der Versteifungsring 23 sollte sich an einer Stelle befinden, die radial außerhalb des Schwenkbereiches 24 liegt, so daß er die Schwenkbewegung nicht behindert.

Während also beim Ausführungsbeispiel gemäß Figur 1 der Versteifungsring 23 im aus der Haltevertiefung 6 entnommenen Zustand des Dichtungsringes 7 jederzeit sichtbar ist, ist er im Falle des Ausführungsbeispiels gemäß Figur 2 ringsum vollständig von Dichtkörpermaterial umhüllt. Der Versteifungsring 23 ist hier ein integraler Bestandteil des Dichtkörpers 11. Die Herstellung dieser Bauform erfolgt zweckmäßigerweise im Rahmen eines Spritzgießverfahrens, beim dem der Versteifungsring 23 mit Dichtkörpermaterial in der entsprechenden Konturierung umspritzt wird.

Wegen der aussteifenden Wirkung des Versteifungsringes 23 läßt sich der erfindungsgemäße Dichtungsring 7 nicht ohne weiteres in Haltevertiefungen 6 einstückiger Ventilgehäuse 1 montieren. Es ist daher zweckmäßig, das Ventilgehäuse 1 mehrteilig auszubilden. Denkbar wäre eine radiale Trennung im Bereich der Haltevertiefungen 6 oder die Unterteilung des Ventilgehäuses in eine äußere, ringsum geschlossene Hülle und darin einsitzende, axial aufeinanderfolgende Hülsenabschnitte zwischen denen die Haltevertiefungen 6 ausgebildet sind. Die derzeit favorisierte Variante ist allerdings in Figur 1 angedeutet.

Das Ventilgehäuse 1 der Figur 1 ist hälftig längsgeteilt. Es besitzt daher zwei halbschalenähnliche Gehäuseteile 32, 33, die durch eine sich parallel zur Längsachse 5 erstreckende und diese insbesondere enthaltende Trennebene 34 voneinander getrennt sind. Durch nicht näher dargestellte Befestigungsmittel werden die beiden Gehäuseteile 32, 33 fest miteinander verbunden, wobei zwischen die im Bereich der Trennebene 34 aneinandergrenzenden Gehäuse-Randpartien bedarfsgemäß Dichtungen zwischengefügt werden können. Durch die Längsteilung des Ventilgehäuses 1 sind auch die an dieses einstückig angeformten Haltevertiefungen 6 in Abschnitte unterteilt. Es handelt sich hierbei um Umfangsabschnitte 36, 37, die sich beispielsgemäß über jeweils 180° erstrecken. Werden die Gehäuseteile 32, 33 von einander getrennt, so sind bei jedem Gehäuseteil 32, 33 derartige Umfangsabschnitte 36, 37 sichtbar, die sich beim Zusammensetzen der Gehäuseteile 32, 33 zu den ringförmigen Haltevertiefungen 6 ergänzen.

Ersichtlich lassen sich somit die Dichtungsringe 7 bei voneinander getrennten Gehäuseteilen 32, 33 problemlos in die dann geöffneten Vertiefungsabschnitte einlegen, ohne daß es einer Verformung bedürfte. Eine robotergerechte schnelle Montage ist dadurch gewährleistet.

Bevorzugt befindet sich eine jeweilige Haltevertiefung 6 in einem radial in den Aufnahmeraum 2 hineinragenden Ringvorsprung 35. Dadurch ergeben sich axial neben einem jeweiligen solchen Ringvorsprung 35 Ringräume von beträchtlicher Breite, die ein problemlos Strömen des Druckmediums gestatten. Man kann hohe Strömungsgeschwindigkeiten erzielen und selbst der dabei eventuell auf den Dichtungsring 7 wirkende Sog ist nicht im Stande, den Dichtungsring 7 aus seiner Verankerung zu entreißen. Dies selbst dann nicht, wenn die Haltevertiefung 6 wie abgebildet rechteckförmig konturiert ist, was sich herstellungstechnisch als günstig erweist.

## Patentansprüche

1. Dichtungsvorrichtung zur Abdichtung zwischen dem Ventilgehäuse (1) und dem axial bewegbaren Ventilschieber (3) eines Mehrwegeventils, umfassend eine am Ventilgehäuse angeordnete radiale Haltevertiefung (6) und einen in der Haltevertiefung (6) aufgenommenen Dichtungsring, wobei die Haltevertiefung (6) zwei in axialer Richtung beabstandete und den Dichtungsring aufnehmende Vertiefungsflanken (26) aufweist, wobei ferner der Dichtungsring mit einem ringförmigen Dichtkörper (11) aus Material mit gummielastischen Eigenschaften versehen ist, und wobei der Dichtungsring folgende Teile aufweist:
- eine an seinem radial aussen liegenden Bereich vorgesehene, zur Verankerung in einer ventilgehäusefesten Haltevertiefung (6) dienende ringförmige Haltepartie (12),
- eine radial innen angeordnete, den Ventilschieber (3) umschließende ringförmige Dichtpartie (15), deren innerhalb der Haltevertiefung (6) liegender Abschnitt eine geringere Breite als der axiale Abstand zwischen den Vertiefungsflanken (26) der Haltevertiefung (6) aufweist,
- einen zwischen der Haltepartie (12) und der Dichtpartie (15) angeordneten, konzentrisch umlaufenden Stegabschnitt (18), der eine reduzierte Dichtkörperdicke aufweist und einen Schwenkbereich bildet, der der Dichtpartie (15) relativ zu der Haltepartie (12) eine axial gerichtete Seitwärtsbewegung ermöglicht,
- und einen radial ausserhalb des Schwenkbereiches (24) unter koaxialer Anordnung an dem Dichtkörper (11) festgelegten Versteifungsring (23) aus gegenüber dem Dichtkörpermaterial härterem Material,
dadurch gekennzeichnet, daß der Versteifungsring (23) im Bereich der Haltepartie (12) in das Material des einstückig ausgebildeten Dichtkörpers (11) eingebettet und von dem ihm umgebenden Dichtkörpermaterial an Ort und Stelle gehalten wird, und daß der Dichtkörper (11) im Bereich der axial gerichteten Flanken des Stegabschnittes (18) derart konkav konturierte Einschnürungen (22) aufweist und die Vertiefungsflanken (26) den Dichtungsring im Bereich seiner Dichtpartie (15) derart flankieren, daß die Dichtpartie (15) bei der ihr ermöglichten Seitwärtsbewegung auf die Vertiefungsflanke (26) der Haltevertiefung (6) aufläuft.

2. Dichtungsvorrichtung nach Anspruch 1, dadurch gekennzeichnet, daß der Versteifungsring (23) vom Dichtkörpermaterial ringsum vollständig umschlossen ist.

3. Dichtungsvorrichtung nach Anspruch 1, dadurch gekennzeichnet, daß der Versteifungsring (23) in einer ringförmigen, entlang ihres Umfanges offenen Aufnahmevertiefung (27) des Dichtkörpers (11) einsitzt.

4. Dichtungsvorrichtung nach Anspruch 3, dadurch gekennzeichnet, daß der in der ringförmigen Aufnahmevertiefung (27) einsitzende Versteifungsring (23) bündig mit der sich an die Aufnahmevertiefung (27) anschließenden Außenoberfläche des Dichtkörpers (11) ausgebildet ist.

5. Dichtungsvorrichtung nach Anspruch 3 oder 4, dadurch gekennzeichnet, daß die umlaufende Öffnung (28) der ringförmigen Aufnahmevertiefung (27) axial gerichtet ist.

6. Dichtungsvorrichtung nach einem der Ansprüche 3 bis 5, dadurch gekennzeichnet, daß der Versteifungsring (23) ein mechanisch in der ringförmigen Aufnahmevertiefung (27) fixiertes Einlegeteil ist.

7. Dichtungsvorrichtung nach einem der Ansprüche 1 bis 6, dadurch gekennzeichnet, daß der Versteifungsring (23) vom Dichtkörpermaterial umspritzt ist.

8. Dichtungsvorrichtung nach einem der Ansprüche 1 bis 7, dadurch gekennzeichnet, daß die axial gemessene Breite des Dichtkörpers (11) im Bereich der Haltepartie (12) größer ist als im Bereich der Dichtpartie (15).

9. Dichtungsvorrichtung nach einem der Ansprüche 1 bis 8, dadurch gekennzeichnet, daß der Versteifungsring (23) aus Hartkunststoff oder Metall besteht.

## Claims

1. Sealing device for sealing between the valve housing (1) and the axially movable valve slide (3) of a multi-way valve, comprising a radial retaining recess (6) located on the valve housing and a seal ring accommodated in the retaining recess (6), wherein the retaining recess (6) has two recess sides (26) spaced axially apart and holding the seal ring, wherein also the seal ring is provided with an annular sealing body (11) of material with rubber-elastic properties, and wherein the seal ring has the following parts:
- an annular retaining section (12) provided on its radially outside area and serving to anchor it in a retaining recess (6) fixed to the valve housing,
- an annular sealing section (15) encompassing the valve slide (3), and having a section lying within the retaining recess (6) being smaller in width than the axial clearance between the recess sides (26) of the retaining recess (6),
- a concentric web section (18) located between the retaining section (12) and the sealing section (15), which has a reduced sealing body thickness and forms a swivel zone which allows the sealing section (15) an axially-directed sidewards movement relative to the retaining section (12),
- and a reinforcing ring (23) of material which is harder than that of the sealing body, fixed coaxially to the sealing body (11), radially outside the swivel zone,
characterized in that the reinforcing ring (23) is embedded in the material of the one-piece sealing body (11) in the area of the retaining section (12) and is held in place by the sealing body material surrounding it, and that the sealing body (11) has - in the area of the axially aligned sides of the web section (18) - constrictions (22) concavely contoured in such a way, and the recess sides (26) flank the seal ring in the area of its sealing section (15) in such a way, that the sealing section (15) runs up the recess side (26) of the retaining recess (6) in the course of the permitted sidewards movement.

2. Sealing device according to claim 1, characterized in that the reinforcing ring (23) is completely surrounded by sealing body material.

3. Sealing device according to claim 1, characterized in that the reinforcing ring (23) rests in an annular locating recess (27) of the sealing body (11) which is open along its periphery.

4. Sealing device according to claim 3, characterized in that the reinforcing ring (23) resting in the annular locating recess (27) is made flush with the outer surface of the sealing body (11) adjoining the locating recess (27).

5. Sealing device according to claim 3 or 4, characterized in that the opening (28) running round the annular locating recess (27) is axially aligned.

6. Sealing device according to any of claims 3 to 5, characterized in that the reinforcing ring (23) is an insert part fixed mechanically in the annular locating recess (27).

7. Sealing device according to any of claims 1 to 6, characterized in that the reinforcing ring is covered with sealing body material.

8. Sealing device according to any of claims 1 to 7, characterized in that the axially measured width of the sealing body (11) is greater in the area of the retaining section (12) than in the area of the sealing section (15).

9. Sealing device according to any of claims 1 to 8, characterized in that the reinforcing ring (23) is made of rigid plastic or metal.

## Revendications

1. Dispositif d'étanchéité pour réaliser l'étanchéité entre le boîtier de vanne (1) et le tiroir de vanne mobile axialement (3) d'une vanne à voies multiples, comprenant un renfoncement de maintien radial (6) prévu sur le boîtier de vanne et une bague d'étanchéité logée dans le renfoncement de maintien (6), le renfoncement de maintien (6) présentant deux flancs (26) espacés dans la direction axiale et recevant la bague d'étanchéité, la bague d'étanchéité étant de plus munis d'un corps d'étanchéité annulaire (11) en matière à propriétés élastiques et la bague d'étanchéité présentant les parties suivantes :
- une partie de maintien annulaire (12) prévue dans sa zone extérieure radiale, servant à l'ancrage dans un renfoncement de maintien (6) solidaire du boîtier de vanne,
- une partie d'étanchéité annulaire (15) placée à l'intérieur dans le sens radial, entourant le tiroir de vanne (3), dont la section située à l'intérieur du renfoncement de maintien (6) présente une largeur plus faible que la distance axiale entre les flancs (26) du renfoncement de maintien (6),
- une section de liaison (18) disposée de manière concentrique, placée entre la partie de maintien (12) et la partie d'étanchéité (15), qui présente une épaisseur de corps d'étanchéité réduite et forme une zone de pivotement qui permet à la partie d'étanchéité (15) d'effectuer par rapport à la partie de maintien (12) un mouvement latéral axial,
- et une bague de rigidification (23) en matière plus dure que le corps d'étanchéité, immobilisée dans le sens radial à l'extérieur de la zone de pivotement (24) en disposition coaxiale sur le corps d'étanchéité (11),
caractérisé en ce que la bague de rigidification (23) est noyée au niveau de la partie de maintien (12) dans la matière du corps d'étanchéité (11) formé d'un seul tenant et est tenue en place par la matière du corps d'étanchéité qui l'entoure, et en ce que le corps d'étanchéité (11) présente au niveau des flancs tournés dans le sens axial de la section de liaison (18) des étranglements à contours concaves tels, et les flancs (26) du renfoncement entourent la bague d'étanchéité au niveau de sa partie d'étanchéité (15) de telle manière, que la partie d'étanchéité (15) glisse sur les flancs (26) du renfoncement de maintien (6) au cours du mouvement latéral qui lui est permis.

2. Dispositif d'étanchéité selon la revendication 1, caractérisé en ce que la bague de rigidification (23) est entièrement enserrée par la matière du corps d'étanchéité.

3. Dispositif d'étanchéité selon la revendication 1, caractérisé en ce que la bague de rigidification (23) est insérée dans un renfoncement de réception annulaire (27) du corps d'étanchéité (11) ouvert le long de sa circonférence.

4. Dispositif d'étanchéité selon la revendication 3, caractérisé en ce que la bague de rigidification (23) insérée dans le renfoncement de réception annulaire (27) est disposée en affleurement à la surface extérieure du corps d'étanchéité (11) qui se raccorde au renfoncement de réception (27).

5. Dispositif d'étanchéité selon la revendication 3 ou 4, caractérisé en ce que l'ouverture périphérique (28) du renfoncement de réception annulaire (27) est orientée dans le sens axial.

6. Dispositif d'étanchéité selon l'une des revendications 3 à 5, caractérisé en ce que la bague de rigidification (23) est un insert fixé mécaniquement dans le renfoncement de réception annulaire (27).

7. Dispositif d'étanchéité selon l'une des revendications 1 à 6, caractérisé en ce que la bague de rigidification (23) est surmoulée par la matière du corps d'étanchéité.

8. Dispositif d'étanchéité selon l'une des revendications 1 à 7, caractérisé en ce que la largeur axiale du corps de base (11) au niveau de la partie de maintien (12) est supérieure à celle au niveau de la partie d'étanchéité (15).

9. Dispositif d'étanchéité selon l'une des revendications 1 à 8, caractérisé en ce que la bague de rigidification (23) est constituée de matière synthétique dure ou de métal.
